# FASCICULE DE BREVET EUROPEEN

(11) **EP 1 388 699 B1**
(45) Date de publication et mention de la délivrance du brevet: **15.11.2006**
(21) Numéro de dépôt: 03291870.8
(22) Date de dépôt: 29.07.2003
(51) Int. Cl.: F16L 3/223, F16L 55/033, F16L 3/10

(54) **Dispositif de maintien de tuyauteries**
Vorrichtung zur Halterung von Rohrleitungen
Holding device for pipes

(30) Priorité: 09.08.2002 FR 0210168
(43) Date de publication de la demande: 11.02.2004
(73) Titulaire: AMPHENOL - AIR LB, 92700 Colombes (FR)
(72) Inventeur: Vantouroux, Patrick, 45400 Fleury Les Aubray (FR)
(74) Mandataire: Dossmann, Gérard

(56) Documents cités:
- CH-A- 664 430
- US-A- 2 355 742
- US-A- 2 356 318

## Description

La présente invention se rapporte à un dispositif de maintien de tuyauteries comprenant deux parties complémentaires destinées à être assemblées, dont chacune présente dans sa face d'assemblage tournée vers l'autre au moins un creux de forme générale demi-cylindrique, les deux creux correspondants des deux parties se complétant sous une forme correspondant sensiblement à la section extérieure d'une tuyauterie à maintenir entre les deux parties.

On connaît des modes de réalisation les plus divers de tels dispositifs de maintien de tuyauteries.

D'une manière générale, ces dispositifs connus relèvent de deux groupes. Les dispositifs relevant du premier groupe sont conçus pour admettre un glissement axial des tuyauteries les unes par rapport aux autres et par rapport à une éventuelle structure de support, pour tenir compte des dilatations thermiques de ces dernières, les deux parties complémentaires de ces dispositifs étant en matériau rigide. Les dispositifs relevant du deuxième groupe assurent un amortissement des vibrations des tuyauteries, et l'une au moins des deux parties complémentaires de ces dispositifs est constituée par un matériau élastique au moins au niveau des portions en contact avec les tuyauteries, empêchant ainsi toute mobilité axiale des tuyauteries par rapport au dispositif.

Il existe par ailleurs des dispositifs de maintien de tuyauteries du type modulaire comprenant deux éléments tels que des rails sur lesquels peuvent être montés sélectivement des éléments modulaires en fonction du diamètre des tuyauteries à maintenir et du mode de maintien (avec glissement axial ou avec amortissement des vibrations).

Or, pour simplifier la fabrication, la gestion et le montage et pour réduire le coût, il serait désirable de pouvoir disposer de dispositifs de maintien de tuyauteries qui, tout en étant de structure simple et de mise en oeuvre aisée, puissent assurer un maintien de tuyauteries à la fois avec possibilité de glissement axial qu'avec amortissement des vibrations.

Selon le préambule de la revendication 1, le dispositif de maintien de tuyauteries divulgué par le document US-A-2 355 742 comprend deux parties complémentaires destinées à être assemblées, dont chacune présente dans sa face d'assemblage tournée vers l'autre au moins un creux de forme générale demi-cylindrique, les deux creux correspondant des deux parties se complétant sous une forme correspondant sensiblement à la section extérieure d'une tuyauterie à maintenir entre les deux parties. Chaque partie du dispositif comprend un corps en matière rigide présentant au moins un creux dont le rayon est supérieur au rayon extérieur de la tuyauterie à maintenir et qui est garni d'un demi-coussinet intermédiaire en matière élastique lui-même garni intérieurement d'un demi-coussinet en matière rigide dont le rayon intérieur correspond sensiblement au rayon extérieur de la tuyauterie, les deux demi-coussinets étant solidaires l'un de l'autre et du corps.

Chaque tuyauterie à maintenir est donc entourée d'un coussinet rigide composé de deux demi-coussinets, admettant un glissement axial de la tuyauterie, et un manchon élastique formé de deux demi-manchons ou demi-coussinets élastiques est intercalé entre ce coussinet rigide et le corps rigide du dispositif, ce manchon assurant l'amortissement des vibrations de la tuyauterie.

Dans le cas où le dispositif est destiné à la fixation sur une structure de support suivant l'invention telle que définie par le revendication 1, la partie formant berceau destinée à prendre appui sur la structure de support comprend un système de prémontage comprenant au moins un élément d'encliquetage destiné à coopérer avec au moins un trou ménagé dans la structure de support, avant la fixation définitive, par exemple à l'aide de vis d'assemblage des deux parties, qui s'effectue après mise en place des tuyauteries sur la partie formant berceau.

Dans le cadre de l'invention, le corps, le ou les demi-coussinets élastiques et le ou les demi-coussinets rigides de chaque partie pourraient être fabriqués séparément et être assemblés, par exemple par collage. Cependant, il est préférable de mouler le ou les demi-coussinets élastiques directement dans l'interstice entre le ou les creux du corps et le ou les demi-coussinets intérieurs rigides, par surmoulage du corps et du ou des demi-coussinets rigides.

De préférence, le corps et le ou les demi-coussinets intérieurs rigides sont réalisés par moulage en matière thermoplastique et le ou les demi-coussinets intermédiaires élastiques sont formés en élastomère par surmoulage.

De préférence, l'élément d'encliquetage peut comprendre une tête d'encliquetage et est maintenu prisonnier dans un logement du corps de la partie formant berceau en étant mobile en translation entre une position de repos dans laquelle la tête d'encliquetage est en retrait dans le logement et une position active dans laquelle la tête d'encliquetage dépasse de la face d'appui de la partie formant berceau.

Il suffit ainsi, l'élément d'encliquetage ou de préférence les deux éléments d'encliquetage espacés de la partie formant berceau se trouvant en position de repos, de placer cette partie formant berceau sur la structure de support sensiblement dans la position de montage et faire passer ensuite la tête d'encliquetage du ou des éléments d'encliquetage en position active, par exemple en y exerçant une poussée à l'aide d'un outil tel qu'un tournevis, pour faire encliqueter la tête de chaque élément d'encliquetage dans le trou correspondant de la structure de support. Cela simplifie considérablement la pose des tuyauteries avant l'assemblage définitif des deux parties et la fixation de l'ensemble à la structure de support, par exemple à l'aide de vis.

Suivant un mode de réalisation préféré, l'élément d'encliquetage comprend, entre la tête d'encliquetage élargie disposée à une extrémité et un talon de guidage élargi disposé à l'extrémité opposée, une portion intermédiaire de positionnement élastiquement déformable, et le logement recevant cet élément d'encliquetage comprend, entre deux portions d'extrémité élargies recevant l'une la tête d'encliquetage et l'autre le talon de guidage, une portion intermédiaire de butée de largeur réduite servant de double butée à la tête et à la portion de positionnement dans la position de repos et de double butée au talon et à la portion de positionnement dans la position active, après franchissement de la portion de butée du logement par la portion de positionnement de l'élément d'encliquetage, moyennant déformation élastique de cette dernière portion.

En cas d'impossibilité de fixation des tuyauteries à la structure de support entre deux dispositifs de maintien, fixés à cette structure, mais trop espacés il est possible, à l'aide du dispositif suivant l'invention, de maintenir ces tuyauteries les unes par rapport aux autres, sans fixation sur la structure de support, dans une position intermédiaire. Il est préférable dans ce cas, pour éviter un glissement intempestif de ce dispositif de maintien sans fixation, qu'un demi-coussinet intérieur rigide l'une des parties de ce dispositif soit traversé par un trou de passage par lequel un bourrelet de la matière du demi-coussinet intermédiaire élastique correspondant fait saillie vers l'intérieur à travers le demi-coussinet intérieur rigide en question, ce bourrelet de matière élastique, après serrage des parties du dispositif l'une contre l'autre à l'aide de vis d'assemblage, assurant un freinage du dispositif par rapport à l'une des tuyauteries, de préférence par rapport à la tuyauterie de plus grand diamètre.

En se référant aux dessins annexés, on va décrire ci-après plus en détail un mode de réalisation illustratif et non limitatif d'un dispositif de maintien de tuyauterie conforme à l'invention ; sur les dessins :
- la figure 1 est une vue en perspective d'un dispositif conforme à l'invention, après assemblage des deux parties et fixation sur une structure de support ;
- la figure 2 est une vue en perspective du dispositif de la figure 1, avant assemblage des deux parties du dispositif et fixation définitive sur la structure de support ;
- la figure 3 est une vue en perspective éclatée d'une partie du dispositif des figures 1 et 2 ;
- les figures 4 et 5 sont des vues en perspective, partiellement en coupe, de la partie formant berceau du dispositif des figures 1 et 2, montrant un élément d'encliquetage du système de prémontage, respectivement en position de repos et en position active ;
- la figure 6 est une vue en perspective d'un dispositif de maintien sans fixation sur une structure de support ;
- la figure 7 est une vue en perspective d'une partie du dispositif de la figure 6, montrant le moyen de freinage du dispositif sur un tuyauterie.

Le dispositif tel qu'illustré est destiné au maintien de plusieurs tuyauteries 1, au nombre de trois dans l'exemple représenté, dans un même plan, les trois tuyauteries présentant ici des diamètres différents.

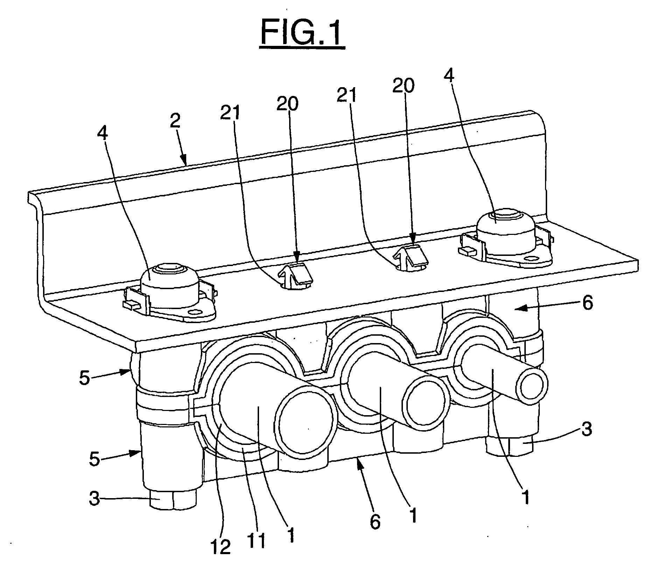

Le dispositif selon les figures 1 à 5 est destiné à la fixation sur une structure de support 2 illustrée symboliquement sous la forme d'une cornière, la fixation s'effectuant à l'aide deux vis 3 et de deux écrous 4 qui sont ici des écrous solidarisés avec la structure de support 2.

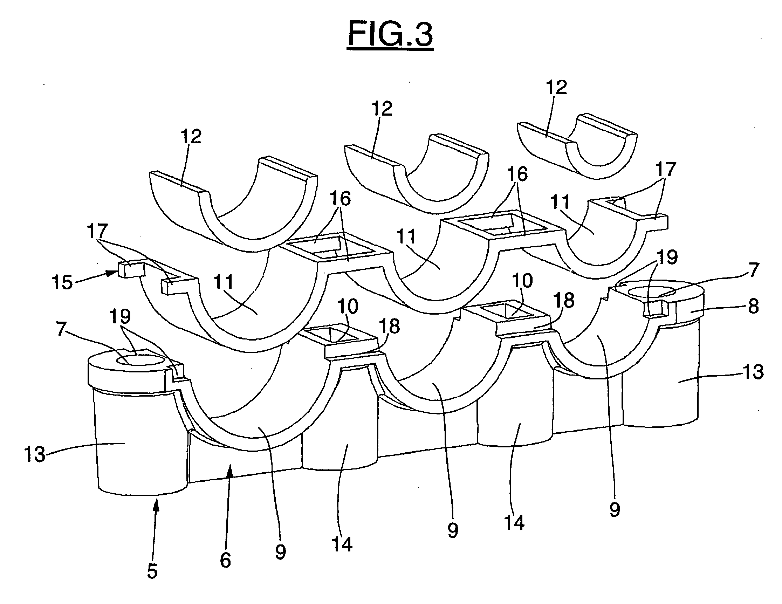

Le dispositif de maintien comprend deux parties 5 identiques, symétriques, formées, comme le montre surtout la figure 3, chacune d'un corps 6 allongé en matière rigide, par exemple moulé en matière thermoplastique. Le corps 6 présente dans sa face d'assemblage 8, entre deux trous de passage 7, plusieurs creux 9 de forme demi-cylindrique espacés les uns des autres, les parties situées entre les creux 9 étant traversées chacune par un passage 10 qui est parallèle aux trous 7 dont la fonction apparaîtra par la suite.

Chaque creux 9, dont le rayon est supérieur au rayon de la tuyauterie 1 destinée à être maintenue est garni d'un demi-coussinet 11 en matière élastique lui-même garni intérieurement d'un demi-coussinet 12 en matière rigide dont le rayon intérieur correspond sensiblement au rayon extérieur de la tuyauterie 1 à maintenir.

Tel que cela apparaît sur la figure 3, le corps 6 comporte des portions plus épaisses 13 aux deux extrémités, autour des trous 7, et des portions plus épaisses 14 autour des passages 10. On reconnaît que les demi-coussinets 11 en matière élastique garnissant les creux 9 du corps 6 de la partie 5 sont réalisés sous la forme d'un ensemble 15 d'une seule pièce, les demi-coussinets 11 étant reliés entre eux par deux barrettes de liaison 16 respectivement et prolongés aux deux extrémités par des barrettes 17. Le corps 6 de la partie 5 présente, pour recevoir ces barrettes 16, 17, des rainures 18, 19 ménagées au niveau de la face d'assemblage 8.

Par contre, les demi-coussinets 12 sont séparés les uns des autres.

Un tel agencement permet, par exemple, de réaliser l'ensemble 15 comprenant les demi-coussinets 11 et les barrettes 16 et 17 par surmoulage, à savoir par moulage dans l'interstice entre les creux 9 du corps 6 et les demi-coussinets 12 rigides, le corps 6 et les demi-coussinets 12 rigides étant placés dans un moule et un élastomère destiné à constituer l'ensemble 15 étant injecté dans l'interstice entre le corps 6 et les demi-coussinets 12.

Chaque partie 5 constitue ainsi un ensemble monopièce qui, bien qu'étant constitué d'au moins deux matériaux différents, ne nécessite aucune disposition particulière de liaison entre ces différentes matières, du fait de ce surmoulage.

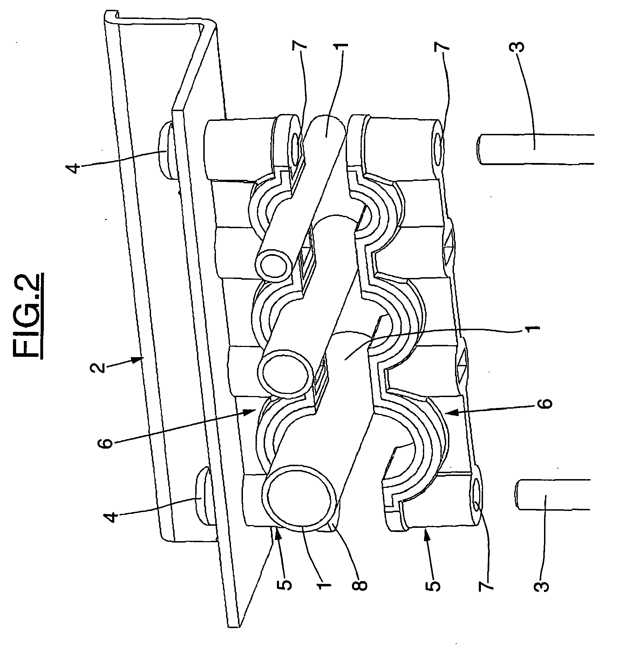

Pour l'assemblage la fixation du dispositif de maintien comprenant les deux parties 5 sur une structure de support telle que la cornière 2 suivant les figures 1 et 2, il est possible d'utiliser uniquement les vis 3 et écrous 4.

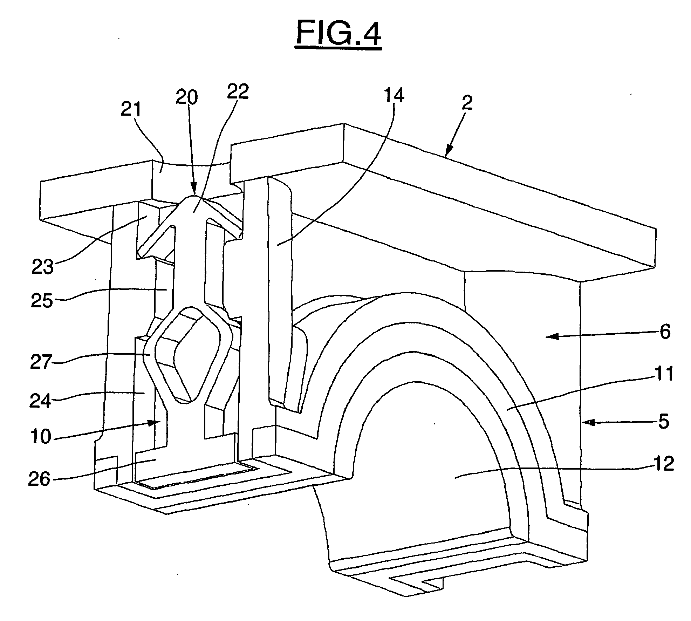

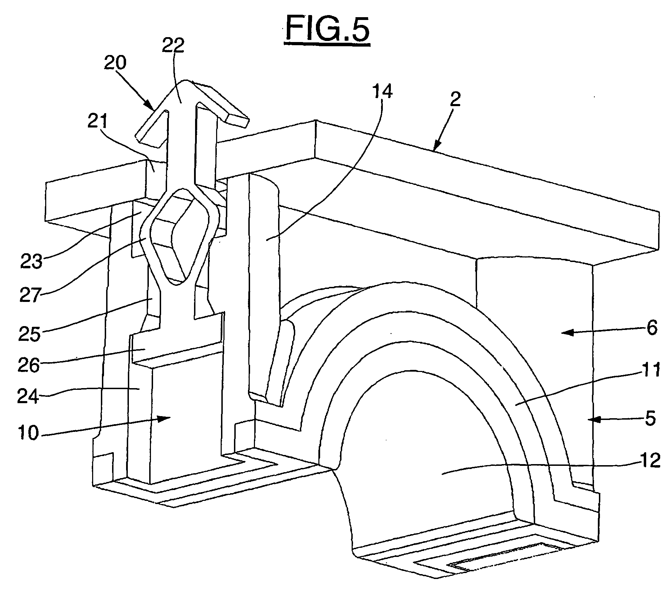

Toutefois, selon l'invention dans la mesure où, avant cette fixation, il est nécessaire de monter les tuyauteries 1 entre les deux parties 5, il est plus simple de prépositionner sur le support 2 la partie formant berceau, destinée à prendre appui sur ce dernier. Le dispositif reçoit, à cet effet, un système de prémontage comprenant, suivant les figures 4 et 5, deux élément d'encliquetage 20 dont chacun est destiné à coopérer avec un trou 21 ménagé dans la structure de support 2, avant la fixation définitive du dispositif à l'aide des vis 3 et des écrous 4.

Selon les figures 4 et 5, le passage 10 servant de logement à chaque élément d'encliquetage 20 dans la partie formant berceau comprend deux portions d'extrémités 23 et 24 élargies et une portion intermédiaire 25 de largeur réduite. L'élément d'encliquetage 20 comprend, entre une tête d'encliquetage 22, élargie par exemple en forme de flèche disposée à une extrémité et un talon de guidage 26 élargi disposé à l'extrémité opposée, une partie intermédiaire 27 élastiquement déformable, formant ressort, par exemple une partie évidée, en forme de losange. L'élément d'encliquetage 20 peut être monté dans le logement 10 par enfoncement de sa tête 22 dans la portion 24 élargie du logement 10, de manière que la tête 22 franchisse la portion 25 de largeur réduite, pour se détendre dans la portion 23, position dans laquelle la portion 25 du logement 10 sert de double butée à la tête 22 et à la portion 27 de l'élément 20 et maintient ce dernier dans cette position illustrée sur la figure 4, dans laquelle la tête 22 se trouve en retrait dans le logement 10.

Pour prépositionner la partie 5 formant berceau sur le support 2, on exerce, par exemple à l'aide d'un tournevis, une poussée sur le talon 26 des éléments 20, pour faire passer ces derniers de cette position en retrait à une position active selon la figure 5, dans laquelle la portion 27 formant ressort, après avoir franchi la portion 25 de largeur réduite du logement 10, vient se détendre dans la portion 23, la tête d'encliquetage 22 dépassant de la face d'appui de la partie 5 formant berceau. Il suffit alors de présenter la partie 5 en position de montage sur le support 2 et d'encliqueter les têtes 22 des éléments 20 dans les trous 21 du support 2, après quoi la partie 5 formant berceau est maintenue sensiblement en position correcte sur le support 2.

On présente ensuite les tuyauteries 1 dans les demi-coussinets 12 de la partie 5 formant berceau et ce n'est que par la suite qu'on rapporte la partie 5 formant chapeau et qu'on assemble les deux parties 5 l'une avec l'autre et avec le support 2 à l'aide des vis 3 et des écrous 4.

Lors de la pose de tuyauteries, par exemple à bord d'avions, il arrive que la structure de support ne se prête pas à la fixation d'un dispositif de maintien sur une longueur supérieure à la distance maximale prescrite entre deux emplacements de fixation. Dans ce cas, il est connu de maintenir les tuyauteries en position intermédiaire les unes par rapport aux autres sans les fixer à la structure de support. Toutefois, il est nécessaire dans ce cas d'immobiliser ces dispositifs de maintien sans fixation par rapport à l'une au moins des tuyauteries, afin d'éviter tout déplacement intempestif des dispositifs suivant l'axe des tuyauteries, par exemple sous l'effet des dilatations thermiques.

Le dispositif de maintien avec fixation tel que décrit ci-dessus et illustré par les figures 1 à 5 se distingue par le fait que les demi-coussinets 12 en matière rigide se trouvent en contact avec les tuyauteries, pour autoriser précisément la mobilité des tuyauteries en translation suivant leur axe par rapport au dispositif de maintien.

Or, moyennant une modification simple du mode de réalisation déjà décrit, le dispositif de maintien suivant la présente invention peut être utilisé également pour le maintien sans fixation sur une structure de support.

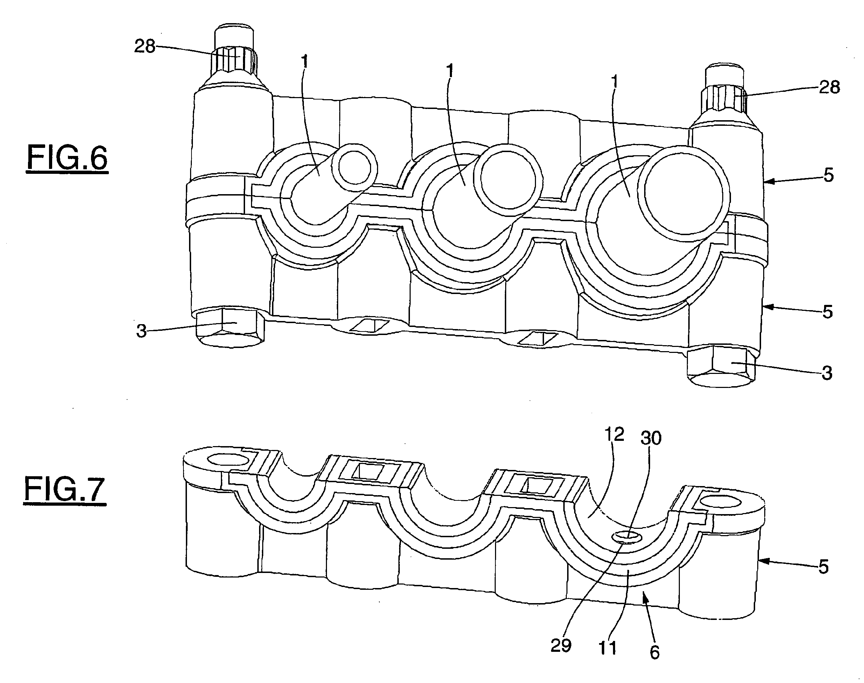

La figure 6 illustre le dispositif suivant l'invention dans son application au maintien des tuyauteries 1 sans fixation sur une structure de support. On retrouve ici les deux parties 5 qui sont assemblées autour des tuyauteries 1 à l'aide des vis 3 et d'écrous 28 constitués ici par des écrous d'assemblage et non pas des écrous de fixation et d'assemblage tels que les écrous 4 solidaires du support 2 selon les figures 1 et 2.

Pour empêcher le dispositif de maintien selon la figure 6 de se déplacer de façon intempestive par rapport aux tuyauteries 1, le coussinet 12 en matière rigide garnissant l'un des creux du corps 6 d'au moins l'une des deux parties 5 comporte un trou de passage 29 par lequel, comme le montre la figure 7, un bourrelet 30 de la matière élastique du demi-coussinet 11 correspondant fait saillie vers l'intérieur, à travers ledit demi-coussinet rigide 12, pour freiner le dispositif, après assemblage à l'aide des vis 3 et écrous 28 autour des tuyauteries 1, par rapport à la tuyauterie reçue dans ledit demi-coussinet 12.

Les corps 6 des parties 5 du dispositif tel que décrit et représenté peuvent être de préférence moulés en matière thermoplastique, de même que les demi-coussinets rigides 12. Les ensembles 15 comprenant les demi-coussinets élastiques 11 sont de préférence réalisés par surmoulage des corps 6 et des demi-coussinets 12, par injection d'élastomère dans l'interstice entre les corps 6 et les demi-coussinets 12.

Bien entendu, le mode de réalisation représenté et décrit n'a été donné qu'à titre d'exemple illustratif et non limitatif et admet de nombreuses modifications et variantes, tant en ce qui concerne le nombre de tuyauteries à maintenir à l'aide d'un même dispositif (par exemple 2, 3, 4, 5 ou davantage) et les diamètres de ses canalisations, diamètres qui peuvent être identiques ou différents, selon les besoins.

## Revendications

1. Dispositif de maintien de tuyauteries comprenant deux parties (5) complémentaires destinées à être assemblées, dont chacune présente dans sa face d'assemblage tournée vers l'autre au moins un creux (9) de forme générale demi-cylindrique, les deux creux correspondant des deux parties se complétant sous une forme correspondant sensiblement à la section extérieure d'une tuyauterie à maintenir entre les deux parties, chaque partie (5) comprenant un corps (6) en matière rigide présentant ledit au moins un creux (9) dont le rayon est supérieur au rayon extérieur de la tuyauterie (1) à maintenir et qui est garni d'un demi-coussinet intermédiaire (11) en matière élastique lui-même garni intérieurement d'un demi-coussinet (12) en matière rigide dont le rayon intérieur correspond sensiblement au rayon extérieur de la tuyauterie (1), les deux demi-coussinets (11, 12) 'étant solidaires l'un de l'autre et du corps (6), **caractérisé par le fait que** la partie (5) formant berceau, destinée à prendre appui sur une structure de support (2), comprend un système de prémontage comprenant au moins un élément d'encliquetage (20) destiné à coopérer avec au moins un trou (21) ménagé dans la structure de support, avant la fixation définitive par exemple à l'aide de vis d'assemblage (3) des deux parties.

2. Dispositif suivant la revendication 1, **caractérisé par le fait que** le demi-coussinet élastique (11) est moulé dans l'interstice entre le creux (9) du corps (6) et le demi-coussinet intérieur rigide (12).

3. Dispositif suivant la revendication 2, **caractérisé par le fait que** le corps (6) et le demi-coussinet intérieur (12) rigide sont réalisés par moulage en matière thermoplastique et que le demi-coussinet intermédiaire élastique (11) est formé par surmoulage en élastomère.

4. Dispositif suivant l'une quelconque des revendications 1 à 3, **caractérisé par le fait que** l'élément d'encliquetage (20) comprend une tête d'encliquetage (22) et est maintenu prisonnier dans un logement (10) du corps (6) de la partie (5) formant berceau, en étant mobile en translation entre une position de repos dans laquelle la tête d'encliquetage est en retrait dans le logement et une position active dans laquelle la tête d'encliquetage dépasse de la face d'appui de la partie formant berceau.

5. Dispositif suivant la revendication 4, **caractérisé par le fait que** l'élément d'encliquetage (20) comprend, entre la tête d'encliquetage (22) élargie disposée à une extrémité et un talon de guidage (26) élargi, disposé à l'extrémité opposée, une portion intermédiaire de positionnement (27) élastiquement déformable et que le logement (10) comprend un passage (10) comprenant, entre deux portions d'extrémités (23, 24) élargies, recevant l'une la tête d'encliquetage (22) et l'autre le talon de guidage (26), une portion intermédiaire de butée (25) de largeur réduite servant de double butée à la tête et à la portion de positionnement, dans la position de repos, et de double butée au talon et à la portion de positionnement dans la position active, après franchissement de la portion de butée par la portion de positionnement moyennant déformation élastique de cette dernière.

6. Dispositif suivant l'une quelconque des revendications précédentes, pour le maintien de plusieurs tuyauteries les unes par rapport aux autres sans fixation sur une structure de support, **caractérisé par le fait qu'**un demi-coussinet intérieur rigide (12) de l'une au moins des deux parties (5) est traversé par un trou de passage (29) par lequel un bourrelet (30) de la matière du demi-coussinet intermédiaire élastique (11) correspondant fait saillie vers l'intérieur à travers le demi-coussinet intérieur rigide (12), pour freiner le dispositif, après assemblage, des deux parties (5) autour des tuyauteries (1), par rapport à l'une des tuyauteries.

## Claims

1. Device for holding pipes comprising two complementary parts (5) intended to be assembled, each of which has, in its assembly face facing towards the other, at least one recess (9) of semicylindrical overall shape, the corresponding two recesses of the two parts completing each other in a shape that roughly corresponds to the exterior cross section of a pipe to be held between the two parts, each part (5) comprising a body (6) made of rigid material having the said at least one recess (9), the radius of which exceeds the exterior radius of the pipe (1) to be held and which is lined with an intermediate half-shell (11) made of elastic material internally lined with a half-shell (12) made of rigid material, the interior radius of which corresponds roughly to the exterior radius of the pipe (1), the two half-shells (11, 12) being secured to one another and to the body (6), **characterized in that** the cradle-forming part (5), intended to bear against the support structure (2) comprises a premounting system comprising at least one clip-fastening element (20) intended to collaborate with at least one hole (21) formed in the support structure, prior to the definitive securing, for example using assembly screws (3), of the two parts.

2. Device according to Claim 1, **characterized in that** the elastic half-shell (11) is moulded in the gap between the recess (9) of the body (6) and the rigid interior half-shell (12).

3. Device according to Claim 2, **characterized in that** the body (6) and the rigid interior half-shell (12) are made by moulding in thermoplastic and **in that** the elastic intermediate half-shell (11) is formed by overmoulding in elastomer.

4. Device according to any one of Claims 1 to 3, **characterized in that** the clip-fastening element (20) comprises a clip-fastening head (22) and is held captive in a housing (10) of the body (6) of the cradle-forming part (5), being able to move in terms of translation between a rest position in which the clip-fastening head is set back in the housing and an active position in which the clip-fastening head protrudes beyond the bearing face of the cradle-forming part.

5. Device according to Claim 4, **characterized in that** the clip-fastening element (20) comprises, between the widened clip-fastening head (22) located at one end and a widened guide heel (26) located at the opposite end, an elastically deformable intermediate positioning portion (27), and **in that** the housing (10) comprises a passage (10) comprising, between two widened end portions (23, 24), one housing the clip-fastening head (22) and the other the guide heel (26), a reduced-width intermediate stop portion (25) acting as a double stop for the head and for the positioning portion in the rest position, and as a double stop for the heel and for the positioning portion in the active position, once the positioning portion has got past the stop portion through elastic deformation of this positioning portion.

6. Device according to any one of the preceding claims, for holding several pipes with respect to each other without attachment to a support structure, **characterized in that** a rigid interior half-shell (12) of at least one of the two parts (5) has, passing through it, a passage hole (29) through which a bulge (30) of the material of the corresponding elastic intermediate half-shell (11) projects inwards through the rigid interior half-shell (12) to brake the device, the two parts (5) having been assembled around the pipes (1), relative to one of the pipes.

## Patentansprüche

1. Vorrichtung zum Halten von Rohrleitungen, umfassend zwei ergänzende Teile (5), die zusammengebaut werden müssen, wobei jedes Teil innerhalb seiner Zusammenbaufläche, die der anderen Fläche zugekehrt ist, mindestens einen Hohlraum (9) von allgemeiner halbzylindrischer Form umfasst und die beiden entsprechenden Hohlräume der beiden Teile sich in einer Weise ergänzen, die im Wesentlichen dem äußeren Querschnitt einer Rohrleitung entspricht, die zwischen den beiden Teilen, gehalten werden muss, wobei jeder Teil (5) einen Körper (6) aus steifem Werkstoff umfasst, der mindestens einen Hohlraum (9) aufweist, dessen Radius größer ist als der Außenradius der Rohrleitung (1), die gehalten werden muss, und der mit einem zwischenliegenden Halblager (11) aus elastischem Werkstoff versehen ist, das seinerseits innen mit einem Halblager (12) aus steifem Werkstoff versehen ist, dessen Innenradius im Wesentlichen dem Außenradius der Rohrleitung (1) entspricht, wobei die beiden Halblager (11, 12) fest miteinander und mit dem Körper (6) verbunden sind, **dadurch gekennzeichnet, dass** der eine Wiege bildende Teil (5), der auf einer Stützstruktur (2) lagern soll, ein Vorbefestigungssystem aufweist, das mindestens ein Einschnappelement (20) umfasst, das mit mindestens einem Loch (21), das in der Stützstruktur vorgesehen ist, gemeinsam wirkt, bevor die beiden Teile beispielsweise per Zusammenbauschraube (3) endgültig befestigt werden.

2. Vorrichtung nach Anspruch 1, **dadurch gekennzeichnet, dass** die elastischen Halblager (11) in den Zwischenraum zwischen dem Hohlraum (9) des Körpers (6) und der inneren steifen Halbschale (12) gespritzt sind.

3. Vorrichtung nach Anspruch 2, **dadurch gekennzeichnet, dass** der Körper (6) und das innere steife Halblager (12) durch Spritzen von thermoplastischem Material entstehen, und dass das zwischenliegende elastische Halblager (11) aus überspritztem Elastomer gebildet wird.

4. Vorrichtung nach Anspruch 1 bis 3, **dadurch gekennzeichnet, dass** das Einschnappelement (20) einen Einschnappkopf (22) umfasst und in einer Aufnahme (10) des Körpers (6) des eine Wiege bildenden Teils (5) fest eingeschlossen ist, wobei es zwischen einer Ruheposition, in welcher der Einschnappkopf sich zurückzieht, und einer aktiven Position, in welcher der Einschnappkopf die Stützfläche des eine Wiege bildenden Teils überschreitet, parallelverschiebbar ist.

5. Vorrichtung nach Anspruch 4, **dadurch gekennzeichnet, dass** das Einschnappelement (20) zwischen dem erweiterten Einschnappkopf (22), der an einem Ende angeordnet ist und einem erweiterten Führungsabsatz (26), der am gegenüberliegenden Ende angeordnet ist, einen zwischenliegenden Positionierabschnitt (27) umfasst, der elastisch verformbar ist und dass die Aufnahme (10) einen Durchlass (10) zwischen den beiden erweiterten Endabschnitten (23, 24) umfasst, die den Einschnappkopf (22) und den anderen Führungsabsatz (26) aufnimmt, wobei ein zwischenliegender Anschlagabschnitt (25) von reduzierter Breite in Ruheposition dem Kopf und dem Positionierabschnitt als Doppelanschlag dient und in aktiver Position dem Absatz und dem Positionieranschlag als Doppelanschlag, nachdem der Anschlagabschnitt durch den Positionierabschnitt mittels einer elastischen Verformung des Positionierabschnitts überschritten ist.

6. Vorrichtung nach einem der vorherigen Ansprüche zum Halten mehrerer Rohrleitungen untereinander ohne Befestigung an einer Stützstruktur, **dadurch gekennzeichnet, dass** ein inneres steifes Halblager (12) von mindestens einem der zwei Teile (5) von einem Durchgangsloch (29) durchlaufen wird, durch welche eine Wulst (30) aus dem Werkstoff des entsprechenden zwischenliegenden elastischen Halblagers (11) nach innen quer durch das innere steife Halblager (12) hervorsteht, um die Vorrichtung nach dem Zusammenbau der beiden Teile (5) um die Rohrleitungen (1) herum in Bezug auf eine der Rohrleitungen zu bremsen.
